# FASCICULE DE BREVET EUROPEEN

(11) **EP 1 448 314 B1**
(45) Date de publication et mention de la délivrance du brevet: **30.03.2011**
(21) Numéro de dépôt: 02803835.4
(22) Date de dépôt: 27.11.2002
(51) Int. Cl.: B05D 1/18, B05D 3/00, B05D 3/10, B05C 3/00, B05C 3/09, B05C 3/02, C03C 17/00

(54) **PROCEDE DE DECORATION D OBJETS ET DISPOSITIF POUR SA MISE EN OEUVRE**
VERFAHREN ZUR VERZIERUNG VON OBJEKTEN UND VORRICHTUNG DAFÜR
METHOD FOR DECORATING OBJECTS AND DEVICE THEREFOR

(30) Priorité: 27.11.2001 FR 0115306
(43) Date de publication de la demande: 25.08.2004
(73) Titulaire: Sarl LB de la Rosiere, 51700 Mareuil le Port (FR)
(72) Inventeur: LECART, Fabien, 51700 Mareuil le Port (FR)
(74) Mandataire: Rhein, Alain
(86) Numéro de dépôt international: PCT/FR2002/004063
(87) Numéro de publication internationale: WO 2003/045580

(56) Documents cités:
- EP-A- 0 381 286
- FR-A- 1 237 675
- GB-A- 936 147
- US-A- 2 981 639
- US-B1- 6 214 424
- PATENT ABSTRACTS OF JAPAN vol. 009, no. 192 (C-296), 8 août 1985 (1985-08-08) & JP 60 061078 A (NISSAN JIDOSHA KK), 8 avril 1985 (1985-04-08) cité dans la demande

## Description

La présente invention a pour objet un procédé de décoration d'objets faits d'un matériau tel que du verre ou du métal, tels que des bouteilles, dans lequel on recouvre une partie au moins de la surface desdits objets d'un revêtement contenant une substance apte à se polymériser en formant des motifs.

La présente invention concerne, par ailleurs, un dispositif pour la mise en oeuvre du procédé selon l'invention.

A l'heure actuelle, il existe de multiples façons de décorer des objets, les motifs et effets obtenus dépendant principalement des techniques et matériaux employés pour les réaliser.

Il existe bien entendu les procédés consistant à appliquer une couche de peinture, où les motifs ne sont pas en relief tel que celui décrit dans les documents EP 0.381.286 et JP 60061078.

On connaît également des procédés faisant intervenir une matière plastique nécessitant un traitement à température élevée, coûteuse en énergie, de tels procédés sont décrits dans les documents GB 936.147 et US 2.981.639.

D'autres procédés sont décrits dans des documents de l'art antérieur, ainsi, le document US 6 214 424, par exemple, se rapporte à un procédé utilisé pour obtenir des décorations en relief, imitant des cristaux de glace sur des objets en verre ou en plastique.

Ledit procédé fait appel à la sérigraphie, et consiste, en résumé, à imprimer, à partir d'un écran, un revêtement polymère sur lesdits objets, puis à traiter ledit polymère, thermiquement ou par rayonnement UV, de sorte à obtenir les cristaux de glace souhaités.

Une ultime étape envisageable consiste à appliquer sur le motif obtenu, un revêtement de protection tel que, notamment, du silicone.

Le document GB 1 487 969 décrit un procédé similaire au précédent, mais basé sur l'emploi d'encres thermoplastiques.

Il est aussi connu, notamment du document EP 0 533 094, de revêtir des objets en verre en procédant d'abord à l'application d'un revêtement obtenu par polymérisation radicalaire, puis en faisant durcir ledit revêtement en le soumettant à un rayonnement à très haute énergie.

Les différents procédés décrits ci-dessus concernent généralement des objets en verre déjà froids et démoulés.

Il est cependant également connu de décorer lesdits objets dès la fin de leur fabrication, lorsqu'ils sont encore chauds et qu'ils se trouvent toujours dans leur moule.

Un procédé envisageable dans ce cas de figure est décrit notamment dans le document US 1 693 735.

Dans ce document, il est proposé d'appliquer des pigments minéraux formant un décor déposé sur un support en tissu lors de la recuite d'objets en verre encore chauds.

Les pigments fondent et se fixent sur lesdits objets lors de ladite recuite.

La présente invention concerne un autre procédé, permettant d'obtenir des motifs imitant des cristaux de glace sur des objets, tels que notamment des bouteilles.

A cet effet, l'invention a pour objet un procédé de décoration d'objets, tels que notamment des objets faits d'un matériau tel que du verre ou du métal, dans lequel on recouvre une partie au moins de ladite surface desdits objets d'un revêtement contenant une substance apte à se polymériser, caractérisé par le fait que :
- on effectue un dépolissage de la surface desdits objets ;
- on sèche et on dépoussière lesdits objets par soufflage ;
- on conditionne ces objets nettoyés de manière à les placer dans des conditions physiques déterminées, pendant un certain lape de temps ;
- on applique sur la surface de chacun desdits objets ladite substance apte à se polymériser;
- on place les objets à sécher pendant 10 à 60 minutes dans ; un environnement à air sec et aération contrôlée, à pression. atmosphérique est sous une température comprise entre 0°C et 8°C.

On notera que, de préférence, on lave au préalable les objets à l'eau.

Selon une autre caractéristique dudit procédé, l'on conditionne les objets pendant 24h à une température comprise entre 4°C et 6°C, avant d'appliquer ladite substance apte à se polymériser.

Selon une autre caractéristique additionnelle, l'on applique sur chacun des objets une solution de cyclohexanone de viscosité prédéfinie selon l'aspect final souhaité desdits motifs.

Selon une autre caractéristique additionnelle de mise en oeuvre préférentielle, ledit procédé est caractérisé en ce que l'on place lesdits objets à sécher sous une température comprise entre 4°C et 6°C.

Selon une autre caractéristique additionnelle du procédé selon l'invention, après avoir appliqué ladite substance apte à polymériser, l'on positionne lesdits objets à sécher de manière à éviter toute interférence entre eux, en respectant un certain espace entre chacun d'entre eux, de préférence d'environ au moins 5cm.

La présente invention concerne, en outre, un dispositif pour la mise en oeuvre du procédé tel que caractérisé ci-dessus.

A cet effet, elle pour objet un dispositif pour la mise en oeuvre du procédé, tel que décrit dans la revendication 6, comprenant une cuve mobile actionnée par un piston à vérin pour l'application de ladite substance apte à polymériser sur lesdits objets à décorer, ledit dispositif comportant encore un tapis roulant muni de rangées de pinces en tant que moyens de préhension et d'acheminement desdits objets, rangée par rangée, vers ladite cuve, ainsi que des moyens permettant le séchage desdits objets à des conditions données de température, d'hygrométrie et d'aération. Selon l'invention, ce dispositif comporte un cadre support fermé par des montants munis d'ouvertures pour le passage contrôlé de l'air et la mise en condition desdits objets pour le séchage.

Selon une autre caractéristique additionnelle du dispositif selon l'invention, les pinces sont positionnées les unes par rapport aux autres sur chacune des rangées à une distance telle que les objets soient espacés d'environ 5 cm, une fois accrochés.

Selon une autre caractéristique, ledit dispositif comporte en outre un chariot basculant amenant lesdits objets, rangée par rangée, vers lesdits moyens de préhension et d'acheminement.

Enfin, selon une dernière caractéristique, ledit chariot basculant comporte un système de courroies et de poulies facilitant la sortie desdites rangées d'objets.

L'invention sera mieux comprise à la lecture de la description qui va suivre, se rapportant à des exemples de réalisation donnés à titre indicatif et non limitatif.

La compréhension de cette description sera facilitée au vu des dessins joints en annexe dans lesquels :
La figure 1 représente une vue en coupe schématique du dispositif selon l'invention vu de face, selon un état de fonctionnement possible,
La figure 2 représente la même vue du dispositif, ce dernier se trouvant dans un autre état,
La figure 3 représente une vue en perspective simplifiée du dispositif selon l'invention.

La présente invention concerne, en particulier, un procédé de décoration d'objets qui peuvent être par exemple en verre ou en métal, tels que par exemple des bouteilles, qui consiste à recouvrir, au moins partiellement, lesdites bouteilles d'un revêtement imitant des cristaux de givre ou de glace.

Ledit revêtement est obtenu à partir d'une solution d'un polymère particulier, apte à former des motifs du type recherché au cours des étapes prévues par ledit procédé.

En fait, ce dernier consiste principalement à préparer d'abord lesdites bouteilles en vue de l'application dudit polymère.

A cet effet, on effectue un dépolissage préalable de la surface des bouteilles, de préférence au moyen d'un sablage sous une pression comprise entre 2 kg/cm² et 4 kg/cm², selon la fragilité des bouteilles concernées.

Cette première étape est particulièrement importante, et le soin qu'on y apporte déterminant pour la qualité du résultat final.

En effet, le dépolissage permettra ensuite à chaque particule de cristal de s'accrocher sur la surface traitée afin de la couvrir de tout son éclat.

Il faut, par conséquent, l'effectuer minutieusement, avec d'extrêmes précautions.

Les bouteilles sont ensuite nettoyées par lavage à l'eau, puis séchées et dépoussiérées par soufflage, toujours avec précaution.

De manière à optimiser la formation des cristaux de givre désirés, le procédé prévoit encore de conditionner les bouteilles nettoyées, pendant un certain laps de temps, de sorte à les placer dans des conditions physiques déterminées, correspondant à celles dans lesquelles la réaction de polymérisation est susceptible de s'effectuer au mieux.

A cet effet, avant de revêtir les bouteilles, on fait séjourner ces dernières pendant 24h dans un local dans lequel on maintient une température comprise entre 4°C et 6°C.

Après cette étape, on procède à l'application d'une substance apte à polymériser.

Ladite application peut être effectuée manuellement, à l'aide d'un pinceau, par exemple, dans le cadre d'une mise en oeuvre artisanale du procédé selon l'invention.

Elle peut également être réalisée mécaniquement, à l'aide des moyens adéquats du dispositif selon l'invention, qui seront décrits plus en avant dans la description.

Le présent procédé préconise, par ailleurs, d'utiliser une solution de cyclohexanone comme substance apte à polymériser par séchage et à former des motifs imitant des cristaux de glace.

Ladite solution de cyclohexanone sera préparée de manière à présenter des caractéristiques physico-chimiques en concordance avec le résultat final souhaité.

Ainsi, la viscosité de ladite solution, par exemple, sera soigneusement prédéfinie en fonction de l'aspect final des cristaux que l'on désire obtenir.

En effet, la viscosité influe directement sur la couleur de ces derniers, pouvant aller du blanc au transparent, en passant par les différents tons de gris.

Plus la viscosité de la solution de cyclohexanone sera élevée, moins lesdits cristaux seront blancs.

Une fois ladite solution apte à polymériser appliquée, on permet à la polymérisation de s'effectuer par séchage, en plaçant lesdites bouteilles dans un environnement présentant les caractéristiques requises.

Le procédé selon la présente invention prévoit, en particulier, de placer lesdites bouteilles pendant 10 à 60 minutes dans un environnement à air sec et aération contrôlée, à pression atmosphérique et sous une température comprise entre 0°C à 8°C, de préférence entre 4°C et 6°C.

Selon les valeurs de ces différentes caractéristiques, on obtiendra un résultat donné.

En effet, la polymérisation s'effectue en formant des cristaux lors de l'évaporation du solvant contenu dans la solution de cyclohexanone.

Elle est déclenchée par le mouvement de l'air, qui doit être parfaitement contrôlé.

De préférence, le séchage ne doit pas être trop rapide, sinon l'effet cristaux souhaité risque d'être sans structure.

Par ailleurs, le taux d'hygrométrie influe également l'aspect des cristaux, qui seront, le cas échéant, plus brillants ou plus mats.

De même, au-delà d'une température de 8°C, il est impossible d'obtenir la cristallisation du revêtement.

Enfin, la pression atmosphérique agit sur la viscosité du polymère, par conséquent sur la couleur finale des cristaux, tel que déjà décrit ci-dessus.

Par ailleurs, le procédé selon l'invention prévoit également de positionner lesdites bouteilles les unes par rapport aux autres lors du séchage de façon à éviter toute interférence, notamment apte à modifier le flux d'air agissant sur l'étape de polymérisation.

A cet effet, lesdites bouteilles sont espacées les unes des autres d'une certaine distance lors de l'étape de séchage du revêtement, qui est de préférence d'au moins 5 cm.

Contrairement aux différentes techniques de décoration d'objets connues à l'heure actuelle, le revêtement obtenu par le biais du procédé selon l'invention, est totalement aléatoire, à l'image des cristaux de givre se formant spontanément dans la nature.

Chaque objet revêtu aura donc la particularité d'être unique, et totalement original.

La présente invention concerne également un dispositif pour la mise en oeuvre dudit procédé.

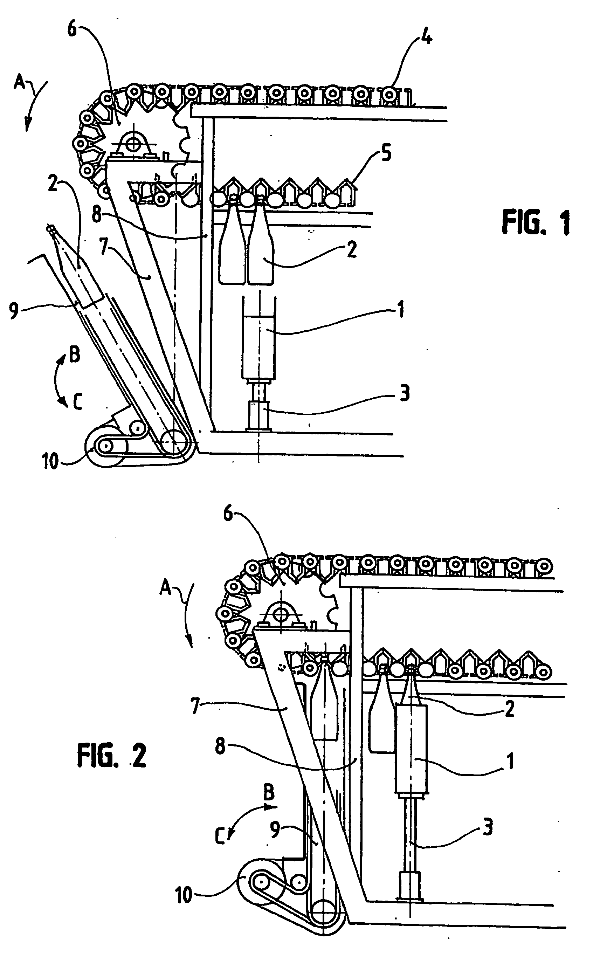

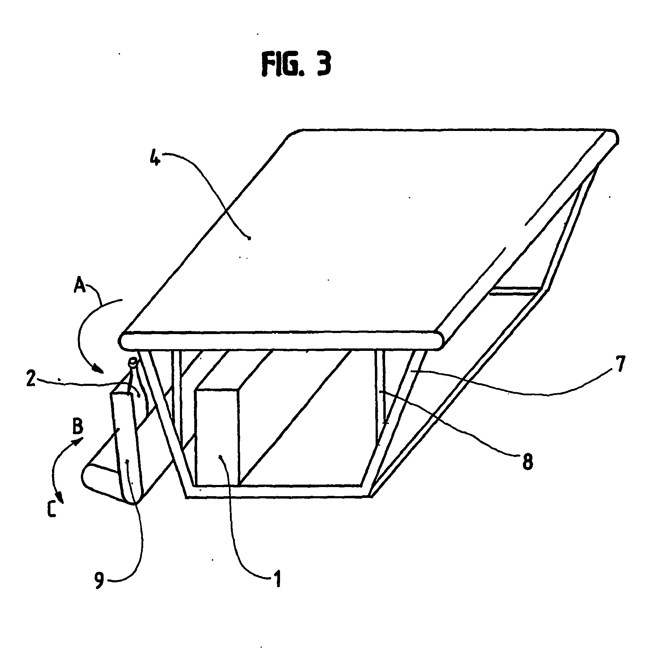

Ledit dispositif sera à présent décrit, en se référant aux figures 1 à 3.

Il comporte une cuve 1 mobile, contenant ladite substance apte à polymériser, et dans laquelle les bouteilles 2 à décorer sont plongées, rangées par rangées.

Un piston à vérin 3 permet d'actionner ladite cuve 1, de sorte à la faire monter vers les bouteilles 2 afin de les enduire, puis redescendre.

Une fois nettoyées, séchées et conditionnées à la température de réaction optimale, lesdites bouteilles 2 pénètrent en rangées dans le dispositif grâce à des moyens de préhension et d'acheminement qui consistent en au moins un tapis roulant 4 muni de rangées successives de pinces 5.

Ces dernières sont, de préférence positionnées les unes par rapport aux autres de manière qu'une fois les bouteilles 3 accrochées, elles soient espacées de préférence d'au moins environ 5 cm les unes des autres.

Ledit tapis roulant 4 est entraîné par deux chaînes parallèles actionnées chacune par un ensemble de roues crantées 6, dans le sens indiqué par la flèche A.

En arrivant à l'entrée du dispositif, les bouteilles 3 sont saisies chacune au niveau du goulot par une desdites pinces 5, de manière étanche, afin d'éviter toute pénétration malencontreuse de produit.

Elles sont ensuite acheminées, par l'avancement du tapis roulant 4 vers la cuve 1.

Lorsqu'elles arrivent au-dessus de la cuve 1, cette dernière monte, poussée par le piston à vérin 3, afin de les faire plonger dans la substance polymérisante.

Puis la cuve 1 redescend, et le mouvement continu du tapis roulant 4 amène une nouvelle rangée de bouteilles 2.

Ledit dispositif comprend également des moyens permettant le séchage des bouteilles 2 une fois enduites, à des conditions optimales de température, d'hygrométrie et d'aération.

Il s'agit, en fait d'un cadre support 7, fermé par des montants 8 muni d'ouvertures positionnées et dimensionnées de manière à ne permettre qu'un passage contrôlé de l'air, et éviter les flux irréguliers, ou brutaux.

Lesdites ouvertures permettent également les échanges de température entre l'enceinte du dispositif et le local où il est situé, et dans lequel on maintient, par ailleurs, une pression atmosphérique et un taux d'hygrométrie prédéterminés en fonction du résultat souhaité.

Lesdites bouteilles 2 sont ainsi mises à sécher immédiatement après avoir été enduites, dans l'enceinte même du dispositif.

Selon une forme de réalisation préférentielle, ledit dispositif comprend, en outre, un chariot basculant 9 qui permet de l'alimenter en rangées de bouteilles 2 de manière automatique.

Ce chariot 9 amène les bouteilles 2 vers les rangées de pinces 5 situées à l'entrée dudit dispositif, en basculant dans le sens de la flèche B.

La rangée de bouteilles 2 est saisie par les pinces 5, puis sort du chariot 9, qui bascule dans le sens de la flèche C pour se retrouver dans sa position initiale et permettre l'introduction d'une nouvelle rangée de bouteilles 2.

Ledit chariot 9 comprend, de préférence, un système 10 de courroies et de poulies qui facilite la sortie des rangées de bouteilles 2, ainsi qu'un accrochage plus aisé au niveau des pinces 5.

Ainsi qu'il apparaît clairement de ce qui précède, la présente invention apporte une solution tout à fait intéressante et originale au problème de décoration d'objets en verre.

En effet, il est à présent tout à fait possible d'obtenir des motifs imitant au plus près les cristaux de givre observés dans la nature, de manière automatisée, et selon un procédé particulièrement simple à mettre en oeuvre, ce qui n'est pas toujours possible avec les techniques antérieures.

Bien que l'invention ait été décrite à propos de quelques formes de réalisation particulières, il est bien entendu qu'elle n'y est nullement limitée et qu'on peut y apporter diverses modifications de forme, de matériaux et de combinaisons de ces divers éléments, sans pour cela s'éloigner du cadre et de l'esprit de l'invention.

En particulier, bien qu'ayant été décrite en prenant comme exemple des bouteilles en verre, la présente invention concerne également tous les autres objets, qu'ils soient simplement décoratifs, ou à usage domestique et alimentaire.

Un marché important concerne notamment les emballages de produits de luxe, tels que les flacons de parfum, les bouteilles de champagne, ou autres spiritueux.

## Revendications

1. Procédé de décoration d'objets, tels que notamment des objets (2) faits d'un matériau tel que du verre ou du métal, dans lequel on recouvre une partie au moins de ladite surface desdits objets (2) d'un revêtement contenant une substance apte à se polymériser, **caractérisé par le fait que** :
- on effectue un dépolissage de la surface desdits objets (2) ;
- on sèche et on dépoussière lesdits objets (2) par soufflage ;
- on conditionne ces objets (2) nettoyés de manière à les placer dans des conditions physiques déterminées, pendant un certain laps de temps ;
- on applique sur la surface de chacun desdits objets (2) ladite substance apte à se polymériser ;
- on place les objets (2) à sécher pendant 10 à 60 minutes dans un environnement à air sec et aération contrôlée, à pression atmosphérique est sous une température comprise entre 0°C et 8°C.

2. Procédé selon la revendication 1, **caractérisé en ce qu'**on effectue le dépolissage de la surface desdits objets (2) par sablage sous une pression comprise entre 2 kg/cm² et 4 kg/cm².

3. Procédé selon l'une des revendications 1 et 2, **caractérisé en ce qu'**avant de revêtir les objets (2), on fait séjourner ces derniers pendant 24h dans un local dans lequel on maintient une température comprise entre 4°C et 6°C.

4. Procédé selon l'une quelconque des revendications précédentes, **caractérisé en ce qu'**après avoir appliqué ladite substance apte à se polymériser, on place lesdits objets à sécher sous une température comprise entre 4°C et 6°C.

5. Procédé selon l'une quelconque des revendications précédentes, **caractérisé par le fait que** l'on applique sur chacun desdits objets (2) une solution de cyclohexanone de viscosité prédéfinie selon l'aspect final souhaité.

6. Dispositif pour la mise en oeuvre du procédé selon l'une quelconque des revendications 1 à 5 comprenant une cuve (1) contenant une substance apte à polymériser, des moyens de préhension et d'acheminement desdits objets (2) rangée par rangée vers ladite cuve (1) et des moyens permettant le séchage desdits objets (2), **caractérisé par le fait qu'**il comporte encore un chariot (9) basculant, amenant lesdits objets (2), rangée par rangée, vers lesdits moyens de préhension et d'acheminement, ladite cuve (1) étant mobile et actionnée par un piston à vérin (3) qui la fait monter pour enduire chaque rangée d'objets (2), puis redescendre et les moyens permettant le séchage desdits objets (2) sont définis par un cadre support (7), fermé par des montants (8) muni d'ouvertures positionnées et dimensionnées de manière à ne permettre qu'un passage contrôlé de l'air et éviter les flux irréguliers ou brutaux pour assurer le séchage des objets (2) à des conditions optimales de température, d'hygrométrie et d'aération.

7. Dispositif selon la revendication 6, **caractérisé par le fait que** les moyens de préhension et d'acheminement consistent en au moins un tapis roulant (4) muni de rangées successives de pinces (5) et entraîné par deux chaînes parallèles actionnées chacune par un ensemble de roues crantées (6).

8. Dispositif selon la revendication 7, **caractérisé en ce que** les pinces (5) sont positionnées les unes par rapport aux autres sur chacune des rangées à une distance telle que les objets (2) soient espacés d'environ 5 cm, une fois accrochés.

9. Dispositif selon l'une quelconque des revendications 6 à 8, **caractérisé par le fait que** ledit chariot basculant (9) comporte un système (10) de courroies et de poulies facilitant la sortie des rangées d'objets (2).

## Claims

1. Method for decorating objects, such as in particular objects (2) made of a material such as glass or metal, in which at least one portion of said surface of said objects (2) is covered with a coating containing a substance capable of polymerizing, wherein:
- the surface of said objects (2) is frosted;
- said objects (2) are dried and dusted by blowing;
- these cleaned objects (2) are conditioned so as to bring them into determined physical conditions, for some period of time;
- said substance capable of polymerizing is applied onto the surface of each one of said objects (2);
- the objects (2) are left to dry for 10 to 60 minutes in an environment of dry air and controlled ventilation, at atmospheric pressure and at a temperature between 0°C and 8°C.

2. Method according to claim 1, wherein the frosting of the surface of said objects (2) is carried out by sandblasting under a pressure between 2 kg/cm² and 4 kg/cm².

3. Method according to one of claims 1 and 2, wherein before coating the objects (2) the latter are left for 24h in a place where the temperature is maintained between 4°C and 6°C.

4. Method according to any of the preceding claims, wherein after having applied said substance capable of polymerizing, said objects are left to dry at a temperature between 4°C and 6°C.

5. Method according to any of the preceding claims, wherein onto each one of said objects (2) is applied a solution of cyclohexanone having a predefined viscosity depending on the desired final aspect.

6. Device for the implementation of the method according to any of claims 1 through 5, comprising a tank (1) containing a substance capable of polymerizing, means for gripping and conveying said objects (2) row by row toward said tank (1) and means permitting the drying of said objects (2), wherein it also includes a tipping trolley (9) bringing said objects (2), row by row, toward said gripping and conveying means, said tank (1) being movable and driven by a strut piston (3) that raises it in order to coat each row of objects (2), then lowers it, and the means permitting the drying of said objects (2) are defined by a support frame (7) closed by stiles (8) provided with openings positioned and dimensioned so as to permit only a controlled air passage and to avoid irregular or violent flows in order to ensure the drying of the objects (2) under optimal temperature, hygrometry, and ventilation conditions.

7. Device according to Claim 6, wherein the gripping and conveying means consist of at least one belt conveyor (4) provided with successive rows of pincers (5) and activated by two parallel chains each driven by a group of toothed wheels (6).

8. Device according to Claim 7, wherein the pincers (5) are positioned with respect to each other on each one of the rows at a distance such that, once hooked, the objects (2) are spaced apart by about 5 cm.

9. Device according to any of claims 6 through 8, wherein said tipping trolley (9) includes a system (10) of belts and pulleys facilitating the exit of the rows of objects (2).

## Patentansprüche

1. Verfahren zum Dekorieren von Gegenständen, wie insbesondere von Gegenständen (2), die aus einem Stoff wie Glas oder Metall hergestellt sind, bei welchem zumindest ein Teil von der besagten Oberfläche der besagten Gegenstände (2) mit einem Überzug beschichtet wird, der eine Substanz enthält, die geeignet ist, um sich zu polymerisieren, **dadurch gekennzeichnet, dass**:
- die Oberfläche der besagten Gegenstände (2) mattiert wird;
- die besagten Gegenstände (2) durch Ausblasen mit Luft getrocknet und entstaubt werden;
- diese aufbereiteten Gegenstände (2) derart bereitgemacht werden, um sie unter bestimmten physikalischen Bedingungen während eines bestimmten Zeitraums zu setzen;
- die besagte Substanz, die geeignet ist, um sich zu polymerisieren, auf die Oberfläche von jedem der besagten Gegenstände (2) aufgetragen wird;
- die Gegenstände (2) während 10 bis 60 Minuten in einer Umgebung mit trockener Luft und gesteuerter Belüftung bei atmosphärischem Druck und bei einer Temperatur, die zwischen 0°C und 8°C liegt, zum Trocknen gelassen werden.

2. Verfahren nach Anspruch 1, **dadurch gekennzeichnet, dass** das Mattieren der Oberfläche der besagten Gegenstände (2) durch Sandstrahlen unter einem Druck erfolgt, der zwischen 2 kg/cm2 und 4 kg/cm2 liegt.

3. Verfahren nach einem der Ansprüche 1 und 2, **dadurch gekennzeichnet, dass** bevor die Gegenstände (2) überzogen werden, diese letzteren 24 Stunden lang in einem Raum verweilen, in dem eine Temperatur gehalten wird, die zwischen 4°C und 6°C liegt.

4. Verfahren nach irgendeinem der vorgehenden Ansprüche, **dadurch gekennzeichnet, dass** nachdem die besagte Substanz, die geeignet ist, um sich zu polymerisieren, aufgetragen worden ist, die besagten Gegenstände zum Trocknen bei einer Temperatur gestellt werden, die zwischen 4°C und 6°C liegt.

5. Verfahren nach irgendeinem der vorgehenden Ansprüche, **dadurch gekennzeichnet, dass** auf jeden der besagten Gegenstände (2) eine Cyclohexanon-Lösung mit einer Viskosität aufgetragen wird, die je nach dem gewünschten dekorativ wirkenden Oberflächenbild vorbestimmt ist.

6. Vorrichtung für die Anwendung des Verfahrens nach irgendeinem der Ansprüche 1 bis 5, umfassend einen Behälter (1), der eine Substanz enthält, die geeignet ist, um sich zu polymerisieren, Mittel zum Greifen und Heranführen der besagten Gegenstände (2), Reihe für Reihe, in Richtung zu dem besagten Behälter (1), und Mittel, die das Trocknen der besagten Gegenstände (2) erlauben, **dadurch gekennzeichnet, dass** sie außerdem einen Schwenkwagen (9) umfasst, der die besagten Gegenstände (2), Reihe für Reihe, in Richtung zu den besagten Mitteln zum Greifen und Heranführen bringt, wobei der besagte Behälter (1) beweglich und durch einen Kolbenzylinder (3) angetrieben sei, der ihn hochsteigen lässt, um jede Reihe von Gegenständen (2) zu beschichten, und ihn anschließend wieder herunterbringt, und die Mittel, die das Trocknen der besagten Gegenstände (2) erlauben, durch einen Trägerrahmen (7) gebildet seien, der durch senkrechte Stützen (8) geschlossen ist, die mit derart angeordneten und dimensionierten Öffnungen ausgestattet sind, um nur einen gesteuerten Luftdurchfluss zu erlauben und eine ungeregelte oder schlagartige Luftströmung zu vermeiden, um das Trocknen der Gegenstände (2) bei optimalen Temperatur-, Feuchtigkeits- und Lüftungsbedingungen zu sichern.

7. Vorrichtung nach Anspruch 6, **dadurch gekennzeichnet, dass** die Mittel zum Greifen und Heranführen aus zumindest einem Fließband (4) bestehen, welches mit aufeinander folgenden Reihen von Greifzangen (5) ausgestattet ist und von zwei parallelen Ketten fortgerissen wird, die jeweils durch eine Gesamtheit von Zahnrädern (6) angetrieben werden.

8. Vorrichtung nach Anspruch 7, **dadurch gekennzeichnet, dass** die Greifzangen (5) auf jeder der Reihen in einem solchen Abstand voneinander angeordnet sind, dass die Gegenstände (2), sobald sie festgeklammert sind, ungefähr 5 cm voneinander beabstandet seien.

9. Vorrichtung nach irgendeinem der Ansprüche 6 bis 8, **dadurch gekennzeichnet, dass** der besagte Schwenkwagen (9) ein System (10) aus Riemen und Rollen umfasst, das den Austritt der Reihen von Gegenständen (2) vereinfacht.
